# EUROPÄISCHE PATENTSCHRIFT

(11) **EP 0 625 082 B1**
(45) Veröffentlichungstag und Bekanntmachung des Hinweises auf die Patenterteilung: **14.08.1996**
(21) Anmeldenummer: 93903148.0
(22) Anmeldetag: 05.02.1993
(51) Int. Cl.: B23Q 7/04, B23Q 3/155, B23Q 37/00

(54) **VORRICHTUNG ZUR SPANGEBENDEN METALLBEARBEITUNG**
DEVICE FOR METAL CUTTING
DISPOSITIF POUR L'USINAGE DE METAUX

(30) Priorität: 08.02.1992 DE 9201595 U
(43) Veröffentlichungstag der Anmeldung: 23.11.1994
(73) Patentinhaber: KOPP WERKZEUGMASCHINEN GmbH, D-89231 Neu-Ulm (DE)
(72) Erfinder: KLICPERA, Udo, D-8962 Pfronten (DE); SCHLIETER, Bernd, D-7915 Elchingen (DE)
(74) Vertreter: Allgeier, Kurt
(86) Internationale Anmeldenummer: DE9300100
(87) Internationale Veröffentlichungsnummer: WO9315874

(56) Entgegenhaltungen:
- EP-A- 0 204 151
- DE-A- 2 251 012
- FR-A- 1 563 794
- GB-A- 926 503
- GB-A- 2 028 187
- US-A- 3 555 963
- US-A- 4 372 728
- PATENT ABSTRACTS OF JAPAN vol. 14, no. 144 (M-951)(4087) 19. März 1990 & JP-A-20 09 548 (FANUC) 23 Januar 1990
- PATENT ABSTRACTS OF JAPAN vol. 5, no. 47 (M-61)(719) 28. März 1981 & JP-A-56 003 160 (OM) 13 Januar 1981
- PATENT ABSTRACTS OF JAPAN vol. 002, no. 005 (M-002)13. Januar 1978 & JP-A-52 118 758 (OKUMA) 5 Oktober 1977
- PATENT ABSTRACTS OF JAPAN vol. 001, no. 125 (M-042)19. Oktober 1977 & JP-A-56 061 879 (OKUMA) 21 Mai 1977
- PATENT ABSTRACTS OF JAPAN vol. 3, no. 20 (M-049)20. Februar 1979 & JP-A- 53 145 175 (TOYODA) 18 Dezember 1978

## Beschreibung

Die Erfindung betrifft eine Vorrichtung zur spangebenden Metallbearbeitung eines Werkstücks in einer Aufspannung durch in Wechselfolge in ihre Arbeitsposition bringbare, aus einem Werkzeugmagazin entnehmbare Werkzeuge nach dem Oberbegriff des Anspruchs 1. Derartige Vorrichtungen sind z.B. aus der EP-A-0 204 151 bekannt, und es sind auch solche Vorrichtungen eingeführt worden, bei denen das Werkstück in einer Aufspannung in Aufeinanderfolge mit mehreren unterschiedlichen Werkzeugen bearbeitet werden kann. Dabei sind die verschiedenen Werkzeuge in der Regel in einem oder mehreren Werkzeughaltern z.B. einem Revolverkopf angeordnet, und durch Wenden und/oder Verschieben der Werkzeughalter werden die Werkzeuge dann zum Einsatz gebracht.

Ferner sind auch solche Vorrichtungen bekannt, bei denen die zum Einsatz vorgesehenen Werkzeuge in Werkzeugmagazinen bereitgehalten werden. Es sind verschiedene Bauarten von derartigen Magazinen bekannt, z.B. Trommel- oder Scheibenmagazin, Kettenmagazin, Regalmagazin u.a.m. Bei den mit Werkzeugmagazinen versehenen Vorrichtungen dieser Art können zwar stets frisch nachgeschliffene oder zugerichtete Werkzeuge bereitgehalten werden, jedoch bedarf es besonderer Werkzeugwechselvorrichtungen, weil diese mittels der Magazine nicht in Bearbeitungsposition gebracht werden können. Die Werkzeuge werden bei diesen Vorrichtungen mittels besonderer Wechselzangen vom Magazin in die Werkzeugaufnahme bzw. Spindel verbracht und dort eingesetzt, nachdem zuvor das auszutauschende Werkzeug herausgenommen worden ist.

Werkzeugmagazin und Wechseleinrichtung gewährleisten eine automatische, der jeweiligen Bearbeitungsaufgabe entsprechende Werkzeugversorgung.

In Verbindung mit Werkzeugwechselvorrichtungen stellen Bearbeitungszentren auch die Basis für höhere Automatisierungsstufen (flexible Fertigungszellen und Fertigungssysteme) dar. Eine besondere Schwierigkeit entsteht dann, wenn es sich um in ihrer Grösse und Beschaffenheit stark voneinander abweichende Werkzeuge handelt, die nacheinander zum Einsatz kommen sollen, und wenn diese Werkzeuge mit unterschiedlich grossen Schaftdurchmessern, Morsekegeln oder Steilkonus(SK) -Grössen versehen sind. Es müssen dann Wechselvorrichtungen zum Einsatz kommen, welche dazu ausgebildet sind, diese unterschiedlich beschaffenen Werkzeuge mit den unterschiedlichen Werkzeugschaftdurchmessern oder SK-Grössen dem Magazin zu entnehmen und der Werkzeugaufnahme bzw. der Spindel zuzuführen und in diese einzusetzen.

In diesen Fällen ist es selbstverständlich auch erforderlich, die entsprechenden Einrichtungen vorzuhalten, um die unterschiedlich grossen Werkzeuge auch mittels unterschiedlich beschaffener Werkzeugaufnahmen bzw. Spindel in verschiedenen Grössen in Einsatzpositionen bringen zu können.

Vorrichtungen dieser Art sind demzufolge zum Entnehmen der Werkzeuge aus einem Werkzeugmagazin und zum Zubringen der Werkzeuge und Einsetzen in eine Werkzeugaufnahme oder Spindel eingerichtet, um sie in Bearbeitungsposition zu bringen. Daher verfügen sie über eine Werkzeugwechselvorrichtung für Bohr-, Fräs- und Schleifwerkzeuge und eine Werkzeugspindeleinheitwechselvorrichtung sowie eine Steuervorrichtung zur getakteten Folgesteuerung der algorithmisch vorgegebenen Bearbeitungsschritte bis zum Erreichen des Werkstück-Fertigmasses.

Liegen Werkzeugachse im Magazin und Spindelachse nicht parallel zueinander, so war bisher der Einsatz eines abgewinkelten Doppelarmgreifers erforderlich.

Ausgehend von diesen im Stand der Technik vorzufindenden Gegebenheiten geht die Erfindung von dem Gedanken aus, dass bisher Vorrichtungen noch nicht bekannt geworden sind, die in einer Ausbil dungsweise als flexible Fertigungszelle oder vollautomatisiertes Bearbeitungszentrum eine sogenannte chaotische Fertigung ermöglichen. Dabei sollen in demselben Fertigungssystem in einer Aufspannung vollautomatisiert unterschiedliche Werkstücke in beliebiger Aufeinanderfolge mittels einer grösseren Zahl von Fertigungsschritten bis zum Erreichen des Werkstück-Fertigmasses mit den unterschiedlichsten Werkzeugen bearbeitet werden. Dabei sollen Bohr-, Dreh-, Fräs- und Schleifarbeiten durchführbar sein.

Die Erfindung geht daher aus von der Aufgabe, eine Vorrrichtung zur spangebenden Metallbearbeitung eines Werkstücks in einer Aufspannung durch in Wechselfolge in ihre Arbeitsposition bringbare, aus einem Werkzeugmagazin entnehmbare Werkzeuge zu schaffen, die mit einer Steuervorrichtung zur getakteten Folgesteuerung der algorithmisch vorgegebenen Bearbeitungsschritte bis zum Erreichen des Werkstück-Fertigmasses und mit einer Werkzeugspindeleinheitwechselvorrichtung für Bohr-, Fräs-, Dreh- und Schleifwerkzeuge versehen ist, und die aus einem kraftbetätigbaren, verfahr- und drehbaren, sowie verschwenkbaren Zangengreifer besteht, dessen Greiferbacken auf die jeweilige Werkzeugentnahmeachse und die Spindelachse ausrichtbar sind, in der Weise weiterzubilden, dass unterschiedlich beschaffene und mit verschieden grossen Schaft- bzw. Konsusgrössen versehene Werkzeuge in beliebiger Aufeinanderfolge zum Einsatz am Werkstück gebracht werden können.

Diese Aufgabe wird bei der eingangs genannten Vorrichtung durch die kennzeichnenden Merkmale des Anspruchs 1 gelöst.

Durch die erfindungsgemässe Ausbildung des Zangengreifers ist es möglich, Werkzeuge mit verschiedenen Schaftdurchmessern einem Magazin zu entnehmen und in eine Spindel einzusetzen. Dabei kann das Werkzeugmagazin als Scheiben-, Trommel-, Ketten- oder Regalmagazin ausgebildet sein. Dies wird erreicht durch geometrische Ausbildung der Greiferbacken, durch welche für verschiedene Grössen des Werkzeugschaftes oder des Konus' die Greiferzange in ihren beiden Endpositionen stets in der Entnahme- bzw. Zuführachse funktionsbereit ist.

Dabei ist erfindungsgemäss der Zangengreifer so ausgebildet, dass die kreisbogenförmigen Abschnitte a, b, d um einen Abstand zu zugehörigen Erzeugungskreisbögen beabstandet sind, deren jeweilige Erzeugungsradien um diesen Abstand grösser als die Radien der kreisbogenförmigen Abschnitte a, b, d sind, wobei die Kreismittelpunkte der Erzeugungskreisbögen sowie der Kreismittelpunkt eines weiteren Erzeugungskreisbogens mit seinem Erzeugungsradius auf einem die Zuführ- und Entnahmeachse schneidenden Öffnungskreisbogen liegen, dessen Erzeugungsmittelpunkt mit dem Drehpunkt der schwenkbaren Greiferbacken zusammenfällt, und auf dem die Kreismittelpunkte aller Erzeugungskreisbögen für die unterschiedlichen Schaftdurchmesser der zu erfassenden Werkzeuge bei den entsprechenden Öffnungsweiten der Greiferbacken mit der Zuführ- und Entnahmeachse zusammenfallen.

Weitere vorteilhafte Ausbildungsmerkmale des Zangengreifers bestehen noch darin, dass alle Erzeugungsradien einen ersten Schnittpunkt bilden, in dem die Erzeugungskreisbögen aneinanderstossen, und jeweils zwei benachbarte Erzeugungsradien einen zweiten und einen dritten Schnittpunkt bilden, und dass sich die Erzeugungskreisbögen zwischen diesen Schnittpunkten erstrecken und dass der Erzeugungskreisbogen mit dem grössten Erzeugungsradius vom ersten Schnittpunkt in Richtung der Zapfenlagerung erstreckt.

Vorteilhafterweise sind die kraftbetätigbaren Greiferbacken in einer um 90° oder 180° schwenkbaren Grundplatte in Zapfenlagerungen gehalten und auf einer Greiferlängsachse spiegelbildlich einander gegenüberliegend zwei Greiferzangen angeordnet. Weiterhin ist es erfindungsgemäss vorteilhaft, die Grundplatte mittels einer Deckplatte zu einem (geschlossenen) Greifergehäuse zu ergänzen, welches beidseitig Maulöffnungen zum Austritt der Greiferbacken offenlässt, wobei die Greiferbacken in ihrer grössten Öffnungsstellung mit ihren äusseren Backen-Endteilen in die Maulöffnungen des Greifergehäuses zurückgezogen sind.

Ausserdem wird erfindungsgemäss vorgeschlagen, dass die äusseren Backen-Endteile der Greiferbacken in der grössten Öffnungsstellung einen Winkel zwischen 15° und 25° zu einer die Zapferlagerung schneidenden Querachse bilden, die senkrecht zur Greiferlängsachse steht. Der Antrieb der Greiferbacken ist nach einem weiteren Erfindungsvorschlag derart vorgesehen, dass jedem Greiferbackenpaar eine separate Kolben-Zylindereinheit zugeordnet ist, deren Kolbenstangen mit je einem längsverschiebaren Widerlager einer einen Schliessdruck auf die Greiferbacken ausübenden Druckfederanordnung und mit einem ein entgegen dem Federdruck im Öffnungssinne gerichteten Kolbenhub ausübenden Übertragungselement verbunden sind. Durch diese Ausbildung wird auch bei Druckmittelausfall und/oder Stromunterbrechung die Halterung der Werkzeuge im Zangengreifer sichergestellt.

Nach weiteren wesentlichen Merkmalen ist vorgesehen, dass zwischen dem Widerlager und den Greiferbacken ein Druckstück eingesetzt ist, dessen beiderseitige Drucknasen den Schliessdruck der Druckfedern auf die Greiferbacken an deren rückwärtig ausgebildeten Formkurven gleitend übertragen, und vor allem weiterhin, dass beide Greiferbacken rückwärtig jeweils mit aneinander anschliessend, abgestuften Rastzähnen versehenen einander spiegelbildlich gegenüberstehend angeordnete Ansätze aufweisen, zwischen welche eine mit dem Widerlager verbundene Sperrnase einführbar ist. Durch diese Massnahme werden mehrere Vorteile erzielt. Nicht nur die Greiferbacken, sondern auch die zu deren Bewegung vorgesehenen Elemente sind dem Verschleiss unterliegende Teile, welche von Zeit zu Zeit ohne umfangreiche Arbeiten austauschbar sein sollen. Deshalb wurde auf einen Greiferbackenantrieb mittels einer Gelenk-Kinematik verzichtet, die bei Verschleisserscheinungen völlig zu ersetzen ist. Im Gegensatz hierzu erfolgt der Backenantrieb nach der Erfindung gelenkfrei, sondern lediglich mittels Druckgliedern. Das von den Antriebsteilen getrennte Druckstück ist leicht auszutauschen; ebenso die Greiferbacken.

Durch den Eingriff einer Sperrnase zwischen die Rastzähne der Greiferbacken wird bei den vier (oder auch mehr) Greiferbacken-Schliessweiten vermieden, dass die die Schliessbewegung bewirkenden Druckfedern den vollen Schliessdruck dauernd aufzubringen haben, sich die Greiferbacken auf die Rastung abstützen. Hinzu kommt, dass nach der weiteren Erfindung zwischen dem Widerlager und dem Druckstück Druckfederpakete eingesetzt sind, die vorzugsweise als Tellerfederpakete gewählt werden. Durch diese Anordnung werden nicht nur Ungenauigkeiten (z.B. aus Verschleiss) der Zangenschliess-Elemente ausgeglichen, es wird ausserdem - ausgehend von der oben geschilderten Rastung der Greiferbacken - ein gleichmässiger Andruck an den Trapezrillen oder den Schäften der Werkzeuge erzielt.

Da der Bewegungstrieb der Greiferbacken gelenkfrei ist, bedarf es einer Vorrichtung zum Antrieb einer Öffnungsbewegung entgegen der Kraft der Schliessfedern. Dies wird dadurch erreicht, dass das mit dem Widerlager verbundene Übertragungselement mit beidseitigen - für jede Greiferhacken - Kulissenführungen versehen ist, in denen Rückholbolzen gleiten, die an den Greiferbacken befestigt sind.

Die Arbeitsweise dieser Greiferzange in Verbindung mit dem Werkzeugmagazin wird nach der weiteren Erfindung besonders einfach und technisch wenig aufwendig gestaltet durch
a) die Anordnung des um eine horizontale Achse schwenkbaren Zangengreifers an einer mittels eines Kraftantriebs um eine vertikale Achse drehbaren Konsole, die
b) in Richtung parallel zur Werkzeugaufnahme- bzw. Spindelachse auf einer Führungsbahn um wenigstens einen Hubschritt vor- und rückwärts verfahrbar ist.

Durch diese Ausbildung ist es möglich, bei im Werkzeugmagazin und der Spindelachse nicht parallel zueinander liegenden Werkzeugachsen auf den Einsatz eines abgewinkelten Doppelarmgreifers zu verzichten und stattdessen den erfindungsgemässen Zangengreifer zu verwenden. Der Werkzeugwechsel ist schnell ausführbar, so dass nur kurze Bearbeitungspausen entstehen.

Die erste vorteilhafte Ausbildung ist darin zu sehen, dass durch den Doppelzangengreifer in der Ausgangsposition ein im Werkzeugmagazin vorhandenes erstes Werkzeug durch die erste Zange erfassbar und durch Verfahren um den einen ersten Hubschritt und Drehen der Konsole um 90° um die vertikale Achse mittels der zweiten Zange ein in der Spindel vorhandenes zweites Werkzeug erfass- und durch einen zweiten Hubschritt aus der Spindel herausziehbar, und dass danach durch Schwenken des Zangengreifers um 180° um die horizontale Achse das erste Werkzeug vor die Spindel bring- und durch Ausführung eines - dritten - Reversier-Hubschritts in die Spindel einführbar und darauf durch Zurückdrehen der Konsole um 90° um die vertikale Achse und Verfahren um den Reversier-Hubschritt in die Ausgangslage verfahrbar ist, in welcher das zweite Werkzeug in das Werkzeugmagazin einsetzbar ist.

Durch diese Ausgestaltung der zusammenwirkenden Vorrichtungen, insbesondere des Bewegungsschemas der Konsole des Zangengreifers, beschränkt auf einen Vor- und Rückhub und eine Wendeschwenkung um 180° des Doppelzangengreifers in Verbindung mit dem für die Werkzeugspindeleinheit vorgesehenen Rückhubschritt wird eine besonders steuerungsmässig einfach beherrschbare Ausbildungsweise geschaffen, die auch ein grosses Mass an Sicherheitsreserve bietet. Auch der rein vorrichtungsmässige Ausbau-Aufwand bezüglich der erforderlichen Bewegungsmechanik und der Antriebe ist einfach und übersichtlich.

Eine Variante hierzu, bei welcher die Rück- und Vor-Hubschritte der Werkzeugspindeleinheit nicht erforderlich sind, sondern alle Bewegungsabläufe von der Zangengreifer-Kombination ausgeführt werden, besteht - wie nachstehend beschrieben - darin, dass durch den Doppelzangengreifer in der Ausgangsposition ein im Werkzeugmagazin vorhandenes erstes Werkzeug durch die erste Zange erfassbar und durch Verfahren um einen Hubschritt und Drehen der Konsole um 90° um die vertikale Achse mittels der zweiten Zange ein in der Spindel vorhandenes zweites Werkzeug erfass- und durch einen Rückhubschritt der Werkzeugspindeleinheit aus der Spindel herausziehbar, und dass danach durch Schwenken des Zangengreifers um 180° um die horizontale Achse das erste Werkzeug vor die Spindel bring- und durch Ausführung eines - weiteren - Reversier-Rückhubschritts in die Spindel einführbar und darauf durch Zurückdrehen der Konsole um 90° um die vertikale Achse und Verfahren um den Reversier-Hubschritt in die Ausgangslage verfahrbar ist, in welcher das zweite Werkzeug in das Werkzeugmagazin einsetzbar ist.

Die bauliche Ausgestaltung der Werkzeugwechselvorrichtung erlaubt auch noch eine dritte und vierte Bewegungsablauf-Variante. Diese unterscheidet sieh von den beiden vorbeschriebenen Lösungen vor allem dadurch, dass sie bei Werkzeugen von besonders grossem Durchmesser anwendbar ist, die möglicherweise das Einschwenken der Konsole mit dem Doppelzangengreifer von der Magazin-Ebene in die Querebene zur Werkzeugspindel behindern könnten. Bei den oben beschriebenen Werkzeugwechselabläufen kann daher der Durchmesser der Werkzeuge auf bestimmte Grösstmasse beschränkt sein, wenn man nicht eine grössere Dimensionierung der Verschiebewege in Kauf nehmen will. Diese Schwierigkeit wird mittels der nachstehend beschriebenen Lösung bis zu einem gewissen Grade behoben, wobei die Lösung auf beide erstgenannten Varianten anwendbar ist, und die darin besteht, dass durch den Zangengreifer in der Ausgangsposition ein im Werkzeugmagazin vorhandenes erstes Werkzeug durch die erste Zange erfassbar und durch Verfahren um einen ersten Hubschritt und Schwenken um 90° um die vertikale Achse und Zurückschwenken des Zangengreifers um 90° um die horizontale Achse mittels der zweiten Zange ein in der Spindel vorhandenes zweites Werkzeug erfass- und durch einen zweiten Hubschritt aus der Spindel herausziehbar, und dass danach durch Schwenken des Zangengreifers um 180° um die horizontale Achse das erste Werkzeug vor die Spindei bring- und durch Ausführung eines - dritten - Reversier-Hubschritts in die Spindel einführbar und danach durch Schwenken des Zangengreifers um 90° um die horizontale Achse und Zurückdrehen der Konsole um 90° um die vertikale Achse, Zurückschwenken des Zangengreifers um 90° um die horizontale Achse und Verfahren um den Reversier-Hubschritt in die Ausgangslage verfahrbar ist, in welcher das zweite Werkzeug in das Werkzeugmagazin einsetzbar ist.

Ein für die Ausbildung der Vorrichtung zu einem hochautomatisierten Fertigungszentrum sehr bedeutsamer Erfindungsgedanke bezieht sieh auf den Vorrichtungsteil zum Wechseln der Werkzeugspindeleinheiten, die auf den Vorrichtungsteil zum Wechseln der Werkzeuge zwischen dem Werkzeugmagazin und der jeweils in Arbeitsposition befindlichen Werkzeugspindel bzw. Werkzeugspindeleinheit anwendbar ist, der einen kraftbetätigbaren, verfahr- und drehbaren sowie verschwenkbaren Zangengreifer aufweist, dessen öffen- und schliessbare Greiferbakken auf die jeweilige Werkzeugentnahmeachse und die Spindelachse ausrichtbar sind. Ausgehend hiervon ist die erfindungsgemässe Werkzeugspindeleinheitwechselvorrichtung mit einer vertikalen, auf einer gemeinsamen Maschinenfuss-Einheit angeordnete Ständerkonsole sowie einer mit dieser betriebsmässig lös- und auswechselbar verbundenen Werkzeugspindeleinheit und einer unterhalb der betriebsmässig mit der Ständerkonsole verbundenen Werkzeugspindeleinheit angeordneten, zum richtungsgeführten Wegschieben der von der Ständerkonsole gelösten Werkzeugspindeleinheit aus ihrer Arbeitsposition in eine im Abstand von der Ständerkonsole eingerichtete Bereitschaftsposition ausgebildeten (ersten) Versehiebebahn versehen.

Diese Lösung beinhaltet einen mittels der gemeinsamen Werkzeugfuss-Einheit mit dem Vorrichtungsteil zum schnellen automatisierten Wechseln der Werkzeuge verbundenen Vorrichtungsteil, der eine weitere Dimension in der Auswahl der aufeinanderfolgend einzusetzenden Werkzeuge eröffnet. Diese müssen jetzt nicht mehr danach ausgewählt werden, welche Werkzeugaufnahme bzw. Spindel der Werkzeugspindel zur Verfügung steht, sondern es können in beliebiger Reihenfolge in gleicher Werkstückaufspannung unabhängig von der Werkzeuggrösse und deren Konus- oder Schaftgrösse alle erforderlichen Bearbeitungen mit verschiedenartigen Werkzeugen durchgeführt werden.

Dabei kann die Verschiebebahn als Schienenspur ausgebildet und die Werkzeugspindeleinheiten können mit auf dieser geführten Rollen versehen sein. Ferner ist es möglich, auf der Schienenspur besondere verfahrbare Roll-Container zur Aufnahme von Werkzeugspindeleinheiten anzuordnen, von denen sie dann in eine Bereitschaftsposition weggefördert, z.B. abgehoben werden. Auch kann die Versehiebebahn als Hängebahn ausgebildet sein, von weicher die Werkzeugspindeleinheiten in ihrer Bereitschaftsposition nach unten abgelassen werden.

In Abwandlung hiervon kann als Verschiebebahn auch ein Band- oder Plattenförderer dienen, auf den die Werkzeugspindeleinheiten abgelassen und von dem sie im Bereich Bereitschaftsposition abgehoben oder beiseite geschoben werden.

In bevorzugter Ausgestaltung ist die Verschiebebahn eine gleisartige Schienenspur, auf der die Werkzeugspindeleinheiten mittels Gleitmitteln oder Rollen leicht verfahrbar sind. Dabei kann nach einem weiteren Vorschlag die Verschiebebahn einen heb- und senkbaren Abschnitt unterhalb der Arbeitsposition der an der Ständerkonsole angeordneten Werkzeugspindeleinheit aufweisen. Dieser wird zur Übernahme der Werkzeugspindeleinheit unter dieser angehoben, so dass die Verbindung zur Ständerkonsole gelöst werden kann und die Werkzeugspindeleihheit auf der Verschiebebahn oder auf einem auf dieser verfahrbaren Roll-Container ruht. In Abwandlung hiervon kann erfindungsgemäss die Ständerkonsole oder deren Anschlusselement für die lösbare Verbindung mit der Werkzeugspindeleinheit aus der jeweiligen Arbeitsposition absenkbar ausgebildet sein, so dass die auszuwechselnde Werkzeugspindeleinheit auf die Verschiebebahn abgelassen werden und von dort aus weiterbewegt werden kann.

Je nach der gewählten Ausgestaltung der Verschiebebahn und deren Besonderheiten - wie erwähnt beispielsweise als Förderer oder als Hängebahn - genügt diese zur Aufnahme und zum Abtransport und zur Zuführung der jeweils auszuwechselnden Werkzeugspindeleinheiten, da diese mittels anderer, zusätzlicher Hebewerkzeuge oder Übernahmevorrichtungen in eine Bereitschaftsposition überführt werden können.

Bevorzugterweise ist erfindungsgemäss die Anordnung so vorgesehen, dass die (erste) Versehiebebahn an ihrem Ende eine Verzweigung oder eine Drehscheibe aufweist, an welche eine weitere (zweite) Verschiebebahn angeschlossen ist, die als Bereitschaftsposition für eine Mehrzahl von Werkzeugspindeleinheiten ausgebildet ist oder zu dieser hinführt, wobei eine besonders vorteilhafte Anordnung in der Weise getroffen werden kann, dass die erste Versehiebebahn geradlinig verläuft und die an ihrem Ende anschliessende rechtwinklig zu ihr verlaufend beidseitig sich erstreckende zweite Verschiebebahn als Bereitschaftsposition für eine Mehrzahl von Werkzeugspindeleinheiten ausgebildet ist. Auf diese Weise sind die in der Bereitschaftsposition vorgehaltenen Werkzeugspindeleinheiten mit unterschiedlichen Werkzeugaufnahmen bzw. Spindel für verschieden grosse Werkzeuge jederzeit zugriffsbereit; es ist dann auch leicht möglich, die Werkzeugspindeln im Bedarfsfall auszutauschen oder sie mit Spezialaufnahmevorrichtungen für Sonderwerkzeuge zu versehen.

Weitere vorteilhafte Resonderheiten der erfindungsgemässen Vorrichtung sind noch darin zu sehen, dass die Werkzeugspindeleinheiten mit einem unmittelbar auf der Spindelwelle angeordneten Synchronläufermotor versehen sind die von einem Frequenzwandler drehzahlgeregelt sind. Ausserdem wird das Austauschen der Werkzeugspindeleinheiten noch dadurch besonders erleichtert, wenn nach einen weiteren Merkmal das Anschlusselement der Ständerkonsole und die Anschlussflächen der Werkzeugspindeleinheiten mit fernsteuerbar druckmittelbetätigbaren Pass- und Ankervorrichtungen und Schnellverbindungen für die Stromübertragung versehen sind.

Bei einem erfindungsgemäss gestalteten Bearbeitungszentrum gewährleisten das Werkzeugmagazin, die Werkzeugwechseleinrichtung und die Wechselvorrichtung für die Werkzeugspindeleinheiten eine automatische, der jeweiligen Bearbeitungsaufgabe entsprechende, weitgebend frei gestaltbare Werkzeugversorgung; es stellt somit die Basis für hohe Automatisierungsstufen dar.

Das folgende Ausführungsbeispiel der Erfindung lässt weitere vorteilhafte Merkmale und Besonderheiten erkennen, die anhand der Darstellung in den Zeichnungen im folgenden näher beschrieben und erläutert sind.

Es zeigen
- Fig. 1: eine schematische Gesamt-Draufsicht auf die Vorrichtung,
- Fig. 2: eine schematische Darstellung der Werkzeugwechselvorrichtung,
- Fig. 3: die Darstellung gemäß Fig. 2 in einer abgewandelten Ausbildung
- Fig. 4: die Geometrie der Backenprofilkontur eines erfindungsgemässen Zangengreifers,
- Fig. 5: den Zangengreifer nach Fig. 4 beim Erfassen eines kleinsten Werkzeugschaftes,
- Fig. 6: den Zangengreifer nach 4 für einen nächstgrösseren Werkzeugschaft,
- Fig. 7: den Zangengreifer nach Fig. 4 für einen noch grösseren Werkzeugschaft,
- Fig. 8: den Zangengreifer nach Fig. 7 für den grössten Werkzeugschaft,
- Fig. 9: einen erfindungsgemässen Doppelzangengreifer.

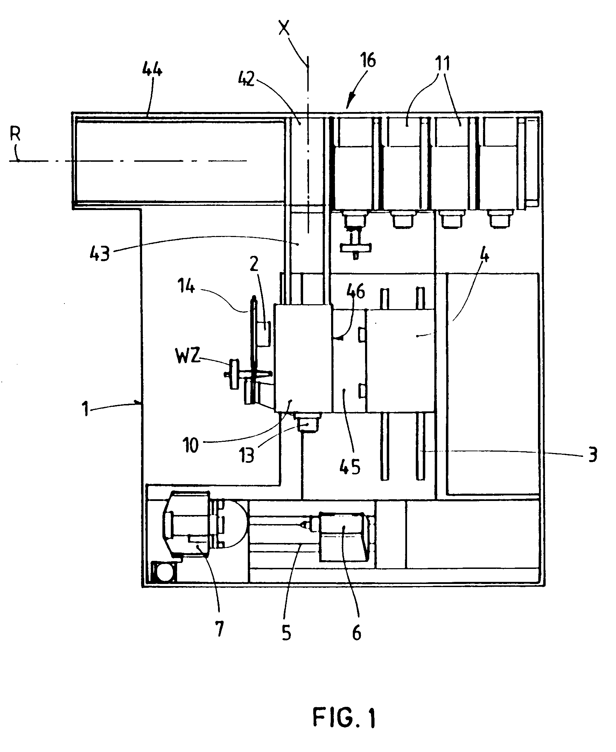

In Fig. 1 ist ein mittels der erfindungsgemässen Vorrichtungen geschaffenes, auf einer Maschinenfusseinheit 1 zusammengefasstes Bearbeitungszentrum dargestellt. Dieses umfasst eine Werkzeugmagazin-Konsole 2 mit dem Werkzeugmagazin 14 und eine Ständerführungswange 3, auf dem die Ständerkonsole 4 Verfahrbar ist. Ferner ist noch eine Reitstock-Führungswange 5 vorgesehen, durch die die Verfahrbarkeit des Reitstocks 6 ermöglicht wird. Mit 7 ist ein nicht näher beschriebenes und dargestelltes automatisches Palettenaufnahmegetriebe bezeichnet.

An der Ständerkonsole 4 ist ein vertikal verfahrbares Anschlusselement 45 mit der Anschlussfläche 46 zum Anschliessen der Werkzeugspindel-Einheit 10 vorgesehen.

Ferner ist in Figur 1 dargestellt, wie die in der Bereitschaftsposition 16 der Werkzeugspindeleinheit-Wechselvorrichtung vorgehaltene Werkzeugspindeleinheit 11 auf einer in Querrichtung R zur Spindelachse Z verlaufenden Führungsbahn 43 und 44 versehiebbar und in eine Wechselposition 42 auf eine zweite coaxial zur Spindelachse Z verlaufende zweite Führungsbahn 43 umsetzbar ist. Auf dieser ist die Werkzeugspindeleinheit 10 oder 11 bis zur Ständerkonsole 4 verfahr- und an die Anschlussfläche 46 anschliessbar. Diese Vorrichtung ermöglicht einen beliebigen Austausch der Werkzeugspindeleinheiten 10, 11 in der Ausgangsposition A.

Die Werkzeuge W werden in der Werkzeugwechselvorrichtung 14 vorgehalten und mittels eines an der Konsole 40 angeordneten Zangengreifers ZG in die Spindel 13 eingesetzt.

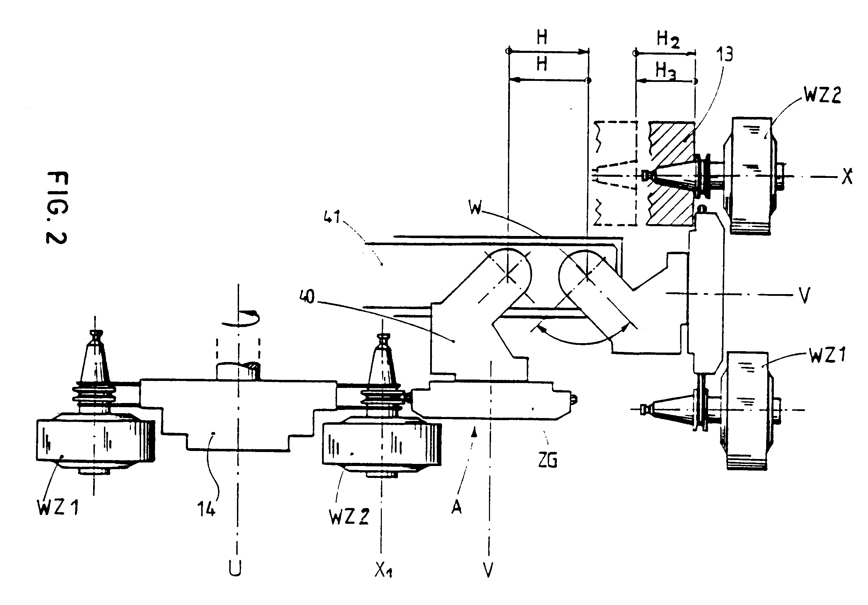

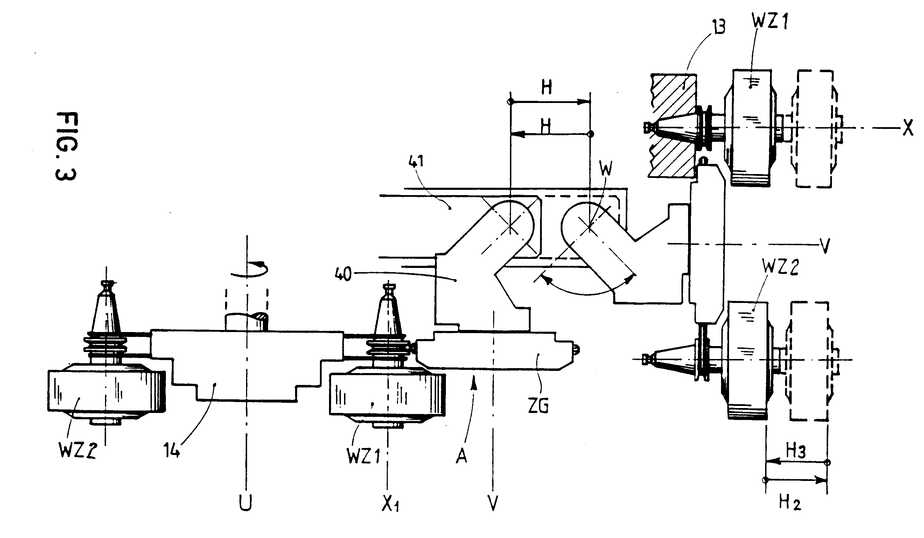

In den Figuren 2 und 3 ist der Werkzeugwechsel mit der erfindungsgemässen Werkzeugwechselvorrichtung dargestellt. Der Aufbau der Werkzeugwechselvorrichtung besteht aus einer Anordnung des um eine horizontale Achse V schwenkbaren Zangengreifers ZG an einer mittels eines Kraftantriebs um 90° um eine vertikale Achse W drehbaren Konsole 40, die in Riechtung parallel zur Werkzeugspindelachse Z auf einer Führungsbahn 41 um einen Hubschritt H in ihre Wechselposition zum Erfassen des Werkzeugs W gebracht wird. Es muss nur ein Hub in Richtung der Spindelachse Z erfolgen, um das von der Zange ZG erfasste Werkzeug aus der Spindel 13 herauszuziehen. Hierzu sind in Fig. 2 und 3 zwei Lösungen dargestellt. Gemäss Fig. 2 führt die Ständerkonsole einen Rückhub H2 aus und nach Schwenkung des Zangengreifers um 180° einen Vorhub H3 um das ausgewechselte Werkzeug in die Spindel 13 einzuführen.

Das Wechseln eines Werkzeugs WZ mit einem gleich- oder unterschiedlich grossen Schaft oder Konus erfolgt gemäss Fig. 3 in der Weise, dass durch den Doppelzangengreifer ZG in der Ausgangsposition A das im Werkzeugmagazin 14 vorhandene erste Werkzeug WZ 1 durch die erste Zange Z 1 erfassbar und durch Verfahren um den Hubschritt H und Drehen der Konsole 40 um 90° um die vertikale Achse W mittels der zweiten Zange Z 2 ein in der Spindel vorhandenes zweites Werkzeug WZ 2 erfasst und durch einen zweiten Hubschritt H 2 aus der Spindel 13 herausgezogen wird. Danach wird durch Schwenken des Zangengreifers ZG um 180° um die horizontale Achse V das erste Werkzeug WZ 1 vor die Spindel 13 gebracht und durch Ausführung eines - dritten - Reversier-Hubschritts H 3 in die Spindel 13 eingeführt. Durch Zurückdrehen der Konsole 40 um 90° um die vertikale Achse W und Verfahren um den Grund-Hubschritt H wird der Zangengreifer ZG in die Ausgangslage A verfahren, in welcher das zweite Werkzeug WZ 2 in das Werkzeugmagazin 14 zurückgesetzt werden kann.

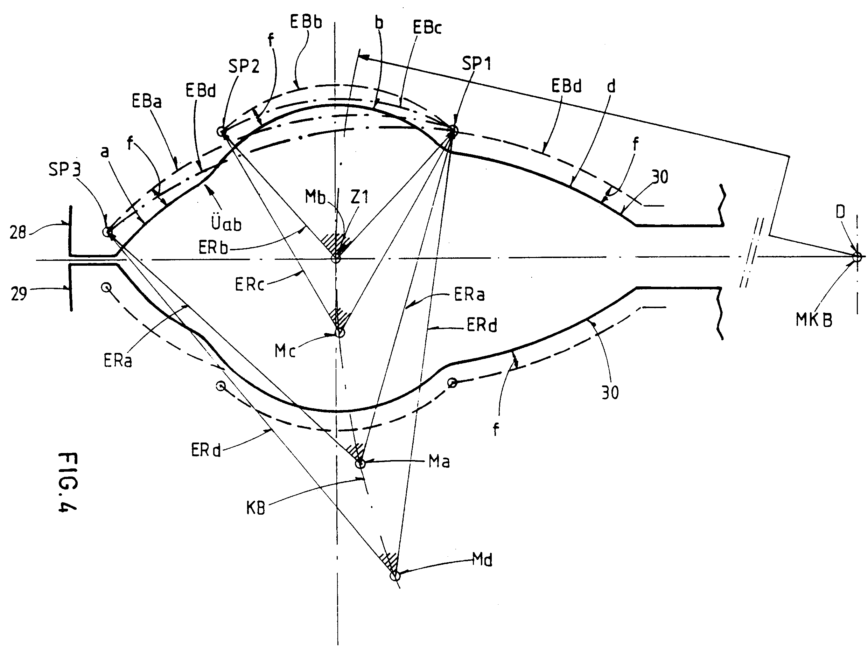

Die Figur 4 zeigt die Backenprofilkontur 30 des erfindungsgemässen Zangengreifers ZG. Die Backenprofilkontur 30 der beiden spiegelbildlichen Greiferbacken 28, 29 werden von drei aneinander anschliessenden kreisbogenförmigen Abschnitten a, b und d gebildet, deren Radien an die unterschiedliehen Durchmesser der Schaft- bzw. Konusgrössen angepasst sind.

Dabei sind die Anteile der kreisbogenförmigen Abschnitte a, b, d um einen Abstand f zu zugehörigen Erzeugungskreisbögen EBa, EBb, EBd beabstandet, deren jeweilige Erzeugungsradien ERa, ERb, ERd um einen Abstand f grösser sind als die Radien der entsprechenden kreisbogenförmigen Abschnitte a, b, d. Die Kreismittelpunkte Ma, Mb, Md der Erzeugungskreisbögen EBa, EBb, EBd sowie der Kreismittelpunkt Mc eines weiteren Erzeugungskreisbogens EBc mit dem Erzeugungsradius ERc, liegen auf einem die Zuführ- und Entnahmeachse Z1, die mit der Spindelachse Z in Übereinstimmung gebracht werden kann, schneidenden Öffnungskreisbogen KB, dessen Erzeugungsmittelpunkt MKB mit dem Drehpunkt D der schwenkbaren Greiferbacken 28, 29 zusammenfällt.

Die Kreismittelpunkte Ma, Mb, Mc, Md aller Erzeugungsbögen EBa, EBb, EBc, EBd für die unterschiedlichen Schaftdurchmesser der zu erfassenden Werkzeuge W fallen bei den entsprechenden Öffnungsweiten der Greiferbacken 28, 29 mit der Zuführ- und Entnahmeachse Z1 zusammen. Dabei bilden alle Erzeugungsradien ERa, ERb, ERc, ERd einen ersten Schnittpunkt SP1, in dem die Erzeugungskreisbögen EBb und EBd aneinanderstossen. Jeweils zwei benachbarte Erzeugungsradien ERb und ERc und EBa und EBd bilden einen zweiten und dritten Schnittpunkt SP2 und SP3, und die Erzeugungskreisbögen EBa und EBb erstrecken sich zwischen diesen Schnittpunkten SP2, SP3 und der Erzeugungskreisbogen EBd mit dem grössten Erzeugungsradius ERd erstreckt sieh in Richtung der Zapfenlagerung 36.

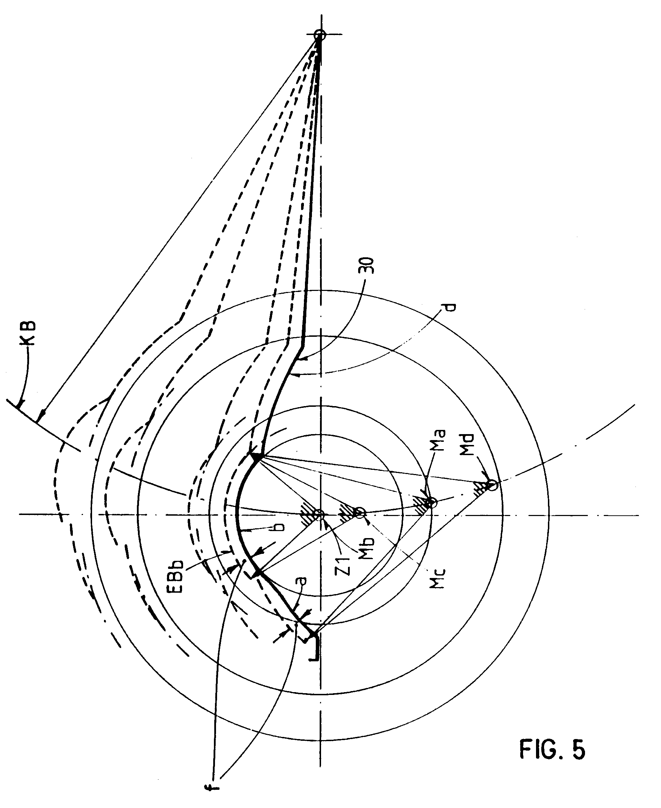

Figur 5 zeigt den Zangengreifer beim Erfassen des kleinsten vorgesehenen, durch einen Vollkreis dargestellten Werkzeugschaftes mit dem kreisbogenförmigen Abschnitt b. Der Kreismittelpunkt Mb fällt mit der Zuführ- und Entnahmeachse Z1 zusammen. Strichpunktiert dargestellt ist der äussere Durchmesser des ergriffenen, in diesem Beispiel mit einer Trapezrille versehenen Werkzeugschaftes, der gerade um den Abstand f weiter ausserhalb liegt und daher mit dem Erzeugungskreisbogen EBb zusammenfällt. In dieser Figur sind ferner als weitere Vollkreise die grösseren Werkzeugschaftdurchmesser von drei weiteren Werkzeugen mit den strichpunktiert dargestellten zugehörigen äusseren Durchmessern sowie dem entsprechenden Verlauf der gestrichelt dargestellten Erzeugungskreisbögen ersichtlich. Diese drei weiteren Positionen sind in den Figuren 5 bis 7 näher dargestellt.

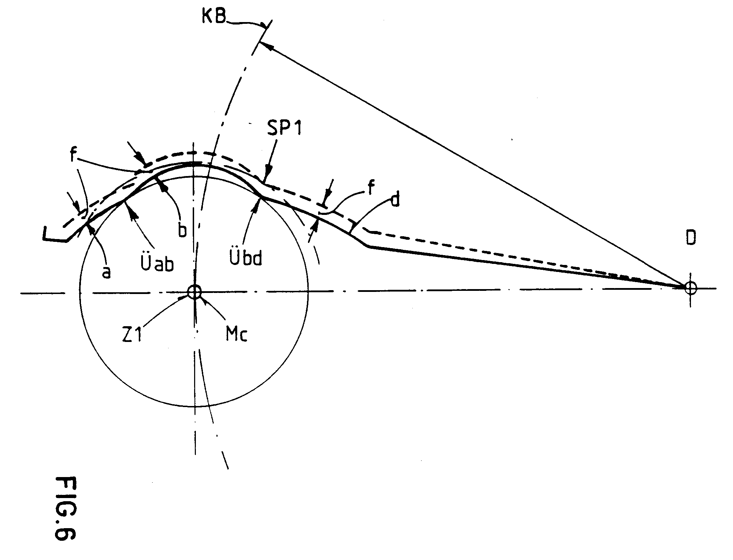

Figur 6 zeigt den Zangengreifer ZG beim Erfassen des nächstgrösseren durch einen Vollkreis dargestellten Werkzeugschaftes mit den Übergangsbereichen Üab und Übd, in denen die Schnittstellen der Backenprofilkonturen gerundet sind. Der Kreismittelpunkt Mc fällt mit der Zuführ- und Entnahmeachse Z1 zusammen. Strichpunktiert ist der äussere Durchmesser des ergriffenen, in diesem Beispiel mit einer Trapezrille versehenen Werkzeugschaftes dargestellt, der gerade um den Abstand f weiter ausserhalb liegt und etwa durch den ersten Schnittpunkt SP1 verläuft.

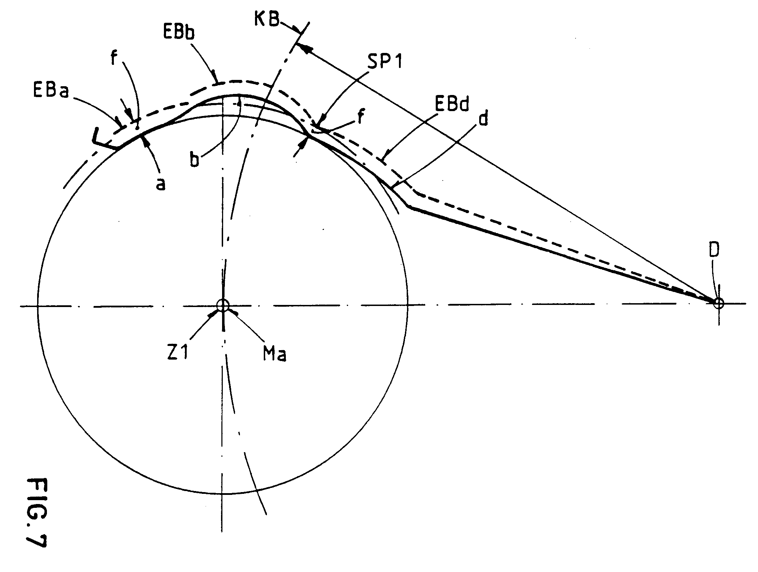

Figur 7 zeigt den Zangengreifer beim Erfassen des nächstgrösseren vorgesehenen, durch einen Vollkreis dargestellten, Werkzeugschaftes mit dem Übergangsbereich Übd und dem kreisförmigen, im Bereich des dritten Schrittpunktes SP3 liegenden Anteil des kreisbogenförmigen Abschnitts a. Der Kreismittelpunkt Ma fällt mit der Zuführ- und Entnahmeachse x1 zusammen. Strichpunktiert ist der äussere Durchmesser des ergriffenen, in diesem Beispiel mit einer Trapezrille versehenen Werkzeugschaftes dargestellt, der gerade um den Abstand f weiter ausserhalb liegt und etwa durch den ersten Schnittpunkt SP1 verläuft.

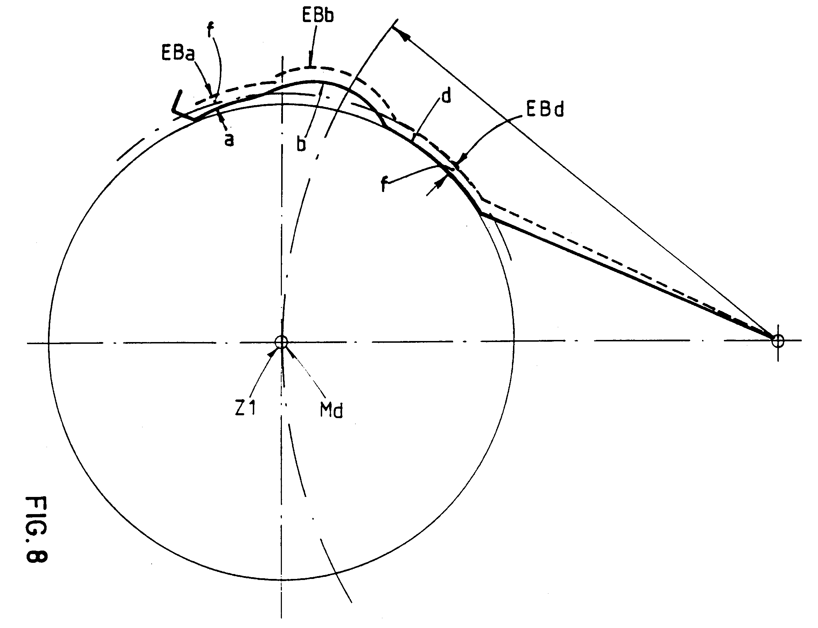

Figur 8 zeigt den Zangengreifer beim Erfassen des grössten vorgesehenen, durch einen Vollkreis dargestellten Werkzeugschaftes mit einem Punkt des kreisförmigen, im Bereich des dritten Schnittpunktes SP3 liegenden Anteils des kreisbogenförmigen Abschnitts a und dem kreisförmigen Anteil des kreisbogenförmigen Abschnitts d. Der Kreismittelpunkt Md fällt mit der Zuführ- und Entnahmeachse Z1 zusammen. Strichpunktiert ist der äussere Durchmesser des ergriffenen, in diesem Beispiel mit einer Trapezrille versehener, Werkzeugschaftes dargestellt, der gerade um den Abstand f weiter ausserhalb liegt und daher mit dem Erzeugungskreisbogen EBb zusammenfällt.

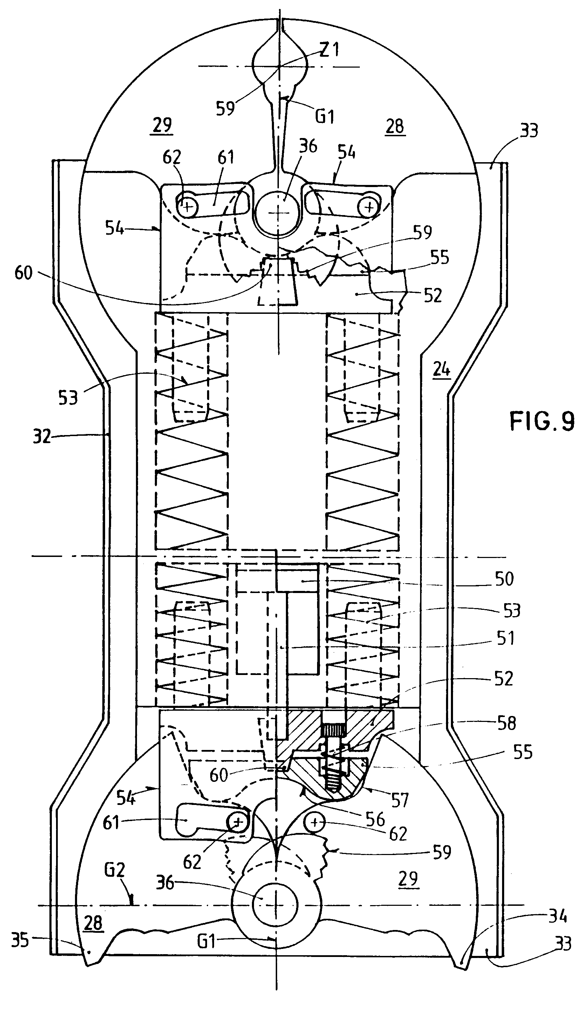

In Figur 9 ist ein erfindungsgemässer kraftbetätigbarer Doppelzangengreifer ZG dargestellt, dessen jeweils spiegelbildlich einander gegenüberliegende Geiferbacken 28, 29 zur Aufnahme von Werkzeugen W mit unterschiedliehen Schaft- bzw. Konusgrössen geformt sind. Die erste Zange Z1 ist in der ganz geöffneten und die zweite Zange Z2 in der ganz geschlossenen Stellung dargestellt. Die Greiferbacken 28, 29 sind in Zapfenlagerungen 36 in einer um 90° und 180° schwenkbaren Grundplatte 24 gehalten, die mittels einer Deckplatte zu einem Greifergehäuse 32 ergänzt ist, welches beidseitig Maulöffnungen 33 zum Austritt der Greiferbakken 28, 29 offenlässt. Bei der ersten Zange Z1 erkennt man, dass die Greiferbacken 28, 29 in ihrer grössten Öffnungsstellung mit ihren äusseren Backen-Endteilen 34, 35 in die Maulöffnung 33 des Greifergehäuses 32 zurückgezogen sind und einen Winkel α zwischen 15° und 25° zu einer die Zarecht zur Greiferlängsachse G₁ steht.

Der Bewegungsantrieb der Greiferbacken 28, 29 erfolgt durch eine jeder Greiferzange zugeorduete separate Kolben-Zylindereinheit 50, deren Kolbenstangen 51 mit je einem längsverschiebbaren Widerlager 52 verbunden sind. Dieses von den Kolbenstangen 51 angetriebene Widerlager übt einen entgegen der Kraft einer den Schliessdruck hervorrufenden Druckfederanordnung 53 im Öffnungssinne wirkenden Gegendruck auf die Greiferbacken 28, 29 aus. Dabei ist vorgesehen, dass zwischen dem Widerlager 52 und den Geiferbacken 28, 29 ein Druckstück 55 eingesetzt ist, welches Drucknasen 56 aufweist. Diese Drucknasen 56 übertragen den Schliessdruck der Druckfedern 53 unmittelbar auf die Greiferbacken 28, 29, indem sie an deren rückwärtig ausgebildeten Formkurven 57 unter diesem Federdruck stehend entlanggleiten. Es findet dauernd eine satte, spielfreie Anlage der Drucknasen 56 des Druckstücks statt.

Die Greiferbacken 28, 29 sind rückwärtig mit Ansätzen 63 versehen, welche abgestufte Rastzähne 59 aufweisen. Im geschlossenen Zustand der Greiferbacken 28, 29 überlappen sich diese Rastzähne 59 und bilden eine mehr oder weniger grosse maulartige gezahnte Öffnung. In diese mit einander gegenüberliegenden Rastzähnen 59 versehene Öffnung wird im geschlossenen Zustand der Greiferbacken 28, 29 eine Sperrnase 60 eingeführt, die mit dem Widerlager 52 in Verbindung steht. Dadurch wird ein ungewolltes Öffnen der Greiferbacken vermieden.

Ein Vorteil ergibt sich noch dadurch, dass zwischen das Widerlager 52 und das Druckstück 55 ein Druckfederpaket 58 eingesetzt ist, welches als Schrauben- oder Tellerfederpaket ausgebildet sein kann. Durch diese Vorkehrung wird erreicht, dass unabhängig vom eventuellen Verschleisszustand der Greiferbacken 28, 29 oder des Widerlagers 52 bzw. des Druckstückes 55 stets ein konstanter Schliessdruck auf die gehaltenen Werkzeuge ausgeübt wird, der auch unabhängig von der Raststellung der Rastzähne 59 ist.

Zum Öffnen der Greiferzange ist mit jedem Widerlager ein Übertragungselement 54 verbunden, welches im wesentlichen aus einer ebenen Platte besteht und sich in Richtung der Greiferbacken 28, 29 erstreckt, und zwar (in Draufsicht) ober- oder unterhalb derselben oder innerhalb von vertieften Ausnehmungen. In dem plattenartigen Übertragungselement 54 sind beidseitig jedem Greiferbackenpaar 28, 29 zugeordnet, Kulissenführungen 61 eingearbeitet, in denen Rückholbolzen 62 gleiten, die an den Greiferbacken 28, 29 befestigt sind. Durch die Rückholbewegung der Kolbenstangen 51 und des mit diesen verbundenen Übertragungselements 54 mit den Kulissen 61 werden die Rückholbolzen 62 und damit die Greiferbacken im Öffnungssinne entgegen der Federkraft bewegt.

## Patentansprüche

1. Vorrichtung zur spangebenden Metallbearbeitung eines Werkstücks in einer Aufspannung durch in Wechselfolge in ihre Arbeitsposition bringbare, aus einem Werkzeugmagazin entnehmbare Werkzeuge mit
A.1 einer Steuervorrichtung zur getakteten Folgesteuerung der algorithmisch vorgegebenen Bearbeitungsschritte bis zum Erreichen des Werkstück-Fertigmasses, und mit
A.2 einer Werkzeugspindeleinheit-Wechselvorrichtinng wobei die jeweils in Arbeitsstellung befindliche Werkzeugspindeleinheit (10) in eine Aufnahmevorrichtung eingesetzt und aus dieser herausfahrbar und gegen eine in einer Breitschaftsposition bereitstehenden Werkzeugspindeleinheit (11) austauschbar ist, und
A.3 einer Werkzeugwechselvorrichtung für Dreh-, Bohr-, Fräs- und Schleifwerkzeuge, bestehend aus einem kraftbetätigbaren, verfahr- und drehbaren sowie verschwenkbaren Zangengreifer, dessen öffen- und schliessbare Greiferbacken auf die jeweilige Werkzeugentnahmeachse und Spindelachse (Z) ausrichtbar sind,
dadurch gekennzeichent, dass
B.1 dessen Geiferbacken (28, 29) eine zur Aufnahme von Werkzeugen (W) mit mehr als zwei unterschiedlichen Schaft- bzw. Konusgrössen geformte spiegelbildliche Backenprofilkontur (30) aufweisen, und
B.2 jede Backenprofilkontur (30) wenigstens drei aneinander anschliessende, kreisbogenförmige Abschnitte (a, b, d) aufweist, deren Radien an die unterschiedlichen Durchmesser von wenigstens drei Schaft- bzw. Konusgrössen angepasst sind.

2. Vorrichtung nach Anspruch 1, dadurch gekennzeichnet, dass
C.1 die kreisbogenförmigen Abschnitte (a, b, d) um einen Abstand (f) zu zugehörigen Erzeugungskreisbögen (EBa, EBb, EBd) beabstandet sind, deren Erzeugungsradien (ERa, ERb, ERd) um den Ab stand (f) grösser als die Radien der kreisbogenförmigen Abschnitte a, b, d sind,
C.2 wobei die Kreismittelpunkte (Ma, Mb, Md) der Erzeugungskreisbögen (EBa, EBb, EBd) sowie der Kreismittelpunkt (Mc) eines weiteren Erzeugungskreisbogens (EBc) mit dem Erzeugungsradius (ERc) auf einem die Zuführ- und Entnahmeachse (Z1) schneidenden Öffnungskreisbogen (KB) liegen, dessen Erzeugungsmittelpunkt (MKB) mit dem Drehpunkt (D) der schwenkbaren Greiferbacken (28, 29) zusammenfällt, und auf dem
C.3 die Kreismittelpunkte (Ma, Mb, Mc, Md) aller Erzeugungskreisbögen (EBa, EBb, EBc, EBd) für die unterschiedlichen Schaftdurchmesser der zu erfassenden Werkzeuge (W) bei den entsprechenden öffnungsweiten der Greiferbacken (28. 29) mit der Zuführ- und Entnahmeachse (Z1) zusammenfallen.

3. Vorrichtung nach Anspruch 2, dadurch gekennzeichnet, dass alle Erzeugungsradien (ERa, ERb, ERc, ERd) einen ersten Schnittpunkt (SP1) bilden, in dem die Erzeugungskreisbögen (EBb und EBd) aneinanderstossen und jeweils zwei benachbarte Erzeugungsradien (ERb, ERc und ERa, ERd) einen zweiten und dritten Schnittpunkt (SP2, SP3) bilden, und dass sich die Erzeugungskreisbögen (EBa, EBb) zwischen diesen Schnittpunkten erstrecken und dass der Erzeugungskreisbogen (EBd) mit dem grössten Erzeugungsradius (ERd) vom ersten Schnittpunkt in Richtung der Zapfenlagerung (36) erstreckt.

4. Vorrichtung nach Anspruch 1, dadurch gekennzeichnet, dass die kraftbetätigten Greiferbacken (28, 29) in einer schwenkbaren Grundplatte (24) in Zapfenlagerungen (36) gehalten sind.

5. Vorrichtung nach Anspruch 4, dadurch gekennzeichnet, dass die Grundplatte (24) der Greiferbacken (28,29) um 180° schwenkbar ist.

6. Vorrichtung nach Anspruch 4, dadurch gekennzeichnet, dass die Grundplatte (24) der Greiferbacken (28,29) um 90° schwenkbar ist.

7. Vorrichtung nach Anspruch 4, dadurch gekennzeichnet, dass auf der Grundplatte (24) auf einer Greiferlängsachse (G₁) spiegelbildlich einander gegenüberliegend zwei Greiferzangen (GZ) angeordnet sind.

8. Vorrichtung nach Anspruch 4, dadurch gekennzeichnet, dass die Grundplatte (24) mittels einer Deckplatte zu einem Greifergehäuse (32) ergänzt ist, welches beidseitig Maulöffnungen (33) zum Austritt der Greiferbacken (28, 29) offenlässt.

9. Vorrichtung nach Anspruch 4, dadurch gekennzeichnet, dass die Greiferbacken (28, 29) in ihrer grössten Öffnungsstellung mit ihren äusseren Backen-Endteilen (34, 35) in die Maulöffnungen des Greifergehäuses (32) zurückgezogen sind.

10. Vorrichtung nach Anspruch 4, dadurch gekennzeichnet, dass die äusseren Backen-Endteile (34, 35) der Greiferbacken (28, 29) in der grössten Öffnungsstellung einen Winkel (α) zwischen 15° und 25° zu einer die Zapfenlagerung (36) sehneidenden Querachse (G₂) bilden, die senkrecht zur Greiferlängsachse (G₁) steht.

11. Vorrichtung nach Anspruch 4, dadurch gekennzeichnet, dass jedem Greiferbackenpaar (28,29) eine separate Kolben-Zylindereinheit (50) zugeordnet ist, deren Kolbenstangen (51) mit je einem längsverschiebbaren Widerlager (52) einer einen Schliessdruck auf die Geiferbacken ausübenden Druckfederanordnung (53) und mit einem ein entgegen dem Federdruck im Öffnungssinne gerichteten Kolbenhub ausübenden Übertragungselement (54, 60, 61) verbunden sind.

12. Vorrichtung nach Anspruch 11, dadurch gekennzeichnet, dass zwischen dem Widerlager (52) und den Greiferbacken (28,29) ein Druckstück (55) eingesetzt ist, dessen beiderseitige Drucknasen (56) den Schliessdruck der Druckfedern (53) auf die Greiferbacken (28, 29) an deren rückwärtig ausgebildeten Formkurven (57) gleitend übertragen.

13. Vorrichtung nach Anspruch 4, dadurch gekennzeichnet, dass beide Greiferbacken (28,29) rückwärtig jeweils mit aneinander anschliessend, abgestuften Rastzähnen (59) versehenen einander spiegelbildlieb gegenüberstehend angeordnete Ansätze (63) aufweisen, zwischen welche eine mit dem Widerlager (52) verbundene Sperrnase (60) einführbar ist.

14. Vorrichtung nach Anspruch 11, dadurch gekennzeichnet, dass zwischen dem Widerlager (52) und dem Druckstück (55) Druckfederpakete (58) eingesetzt sind.

15. Vorrichtung nach Anspruch 11, dadurch gekennzeichnet, dass das mit dem Widerlager (52) verbundene Übertragungselement (54) mit beidseitigen - für jede Greiferbacken (28, 29) - Kulissenführungen (61) versehen ist, in denen Rückholbolzen (62) gleiten, die an den Greiferbacken (62) befestigt sind.

16. Vorrichtung nach den Ansprüchen 1 und 4, gekennzeichnet durch
a) Anordnung des um eine horizontale Achse (v) schwenkbaren Zangengreifers (ZG) an einer mittels eines Kraftantriebs um eine vertikale Achse (w) drehbaren Konsole (40), die
b) in Richtung parallel zur Werkzeugaufnahme- bzw. Spindelachse (Z) auf einer Führungsbahn (41) um wenigstens einen Hubschritt vor- und rückwärts verfahrbar ist.

17. Vorrichtung nach Anspruch 16, dadurch gekennzeichnet, dass durch den Doppelzangengreifer (ZG) in der Ausgangsposition (A) ein im Werkzeugmagazin (14) vorhandenes erstes Werkzeug (WZ 1) durch die erste Zange (Z 1) erfassbar und durch Verfahren um einen Hubschritt (H 1) und Drehen der Konsole (40) um 90° um die vertikale Achse (w) mittels der zweiten Zange (Z 2) ein in der Spindel (13) vorhandenes zweites Werkzeug (WZ 2) erfass- und durch einen Rückhubschritt (R) der Werkzeugspindeleinheit (10) aus der Spindel (13) herausziehbar, und dass danach durch Schwenken des Zangengreifers (ZG) um 180° um die horizontale Achse (v) das erste Werkzeug (WZ 1) vor die Spindel (13) bring- und durch Ausführung eines - weiteren - Reversier-Rückhubschritts (R) in die Spindel (13) einführbar und darauf durch Zurückdrehen der Konsole (40) um 90° um die vertikale Achse (w) und Verfahren um den Reversier-Hubschritt (H 2) in die Ausgangslage (A) verfahrbar ist, in welcher das zweite Werkzeug (WZ 2) in das Werkzeugmagazin (14) einsetzbar ist.

18. Vorrichtung nach Anspruch 16, dadurch gekennzeichnet, dass durch den Doppelzangengreifer (ZG) in der Ausgangsposition (A) ein im Werkzeugmagazin (14) vorhandenes erstes Werkzeug (WZ 1) durch die erste Zange (Z 1) erfassbar und durch Verfahren um einen ersten Hubschritt (H 1) und Drehen der Konsole (40) um 90° um die vertikale Achse (w) mittels der zweiten Zange (Z 2) ein in der Spindel vorhandenes zweites Werkzeug (WZ 2) erfass- und durch einen zweiten Hubschritt (H 2) aus der Spindel (13) herausziehbar, und dass danach durch Schwenken des Zangengreifers (ZG) um 180° um die horizontale Achse (v) das erste Werkzeug (WZ 1) vor die Spindel (13) bring- und durch Ausführung eines - dritten - Reversier-Hubschritts (H 3) in die Spindel (13) einführbar und darauf durch Zurückdrehen der Konsole (40) um 90° um die vertikale Achse (w) und Verfahren um den Reversier-Hubschritt (H 4) in die Ausgangslage (A) verfahrbar ist, in welcher das zweite Werkzeug (WZ 2) in das Werkzeugmagazin (14) einsetzbar ist.

19. Vorrichtung nach Anspruch 16, dadurch gekennzeichnet, dass durch den Zangengreifer (ZG) in der Ausgangsposition (A) ein im Werkzeugmagazin (14) vorhandenes erstes Werkzeug (WZ 1) durch die erste Zange (Z 1) erfassbar und durch Verfahren um ein ersten Hubschritt (H 1) und Schwenken um 90° um die horizontale Achse (v) sowie durch Drehen der Konsole (40) um 90° um die vertikale Achse (w) und Zurückschwenken des Zangengreifers (ZG) um 90° um die horizontale Achse (v) mittels der zweiten Zange (Z 2) ein in der Spindel (13) vorhandenes zweites Werkzeug (WZ 2) erfass- und durch einen zweiten Hubschritt (H 2) aus der Spindel (13) herausziehbar, und dass danach durch Schwenken des Zangengreifers (ZG) um 180° um die horizontale Achse (v) das erste Werkzeug (WZ 1) vor die Spindel (13) bring- und durch Ausführung eines - dritten - Reversier-Hubschritts (H 3) in die Spindel (13) einführbar und danach durch Schwenken des Zangengreifers (ZG) um 90° um die horizontale Achse (v) und Zurückdrehen der Konsole (40) um 90° um die vertikale Achse (w), Zurückschwenken des Zangengreifer (ZG) um 90° um die horizontale Achse (v) und Verfahren um den Reversier-Hubschritt (H 4) in die Ausgangslage (A) verfahrbar ist, in welcher das zweite Werkzeug (WZ 2) in das Werkzeugmagazin (14) einsetzbar ist.

20. Vorrichtung nach Anspruch 1
dadurch gekennzeichnet,
dass die Werkzeugspindeleinheit-Wechselvorrichtung
D.1 eine vertikale, auf einer gemeinsamen Maschinenfuss-Einheit (1) angeordnete Ständerkonsole (4) sowie
D.2 mit dieser betriebsmässig lös- und auswechselbar verbunden eine Werkzeugspindeleinheit (10) und
D.3 eine unterhalb der betriebsmässig mit der Ständerkonsole (4) verbundenen Werkzeugspindeleinheit (10) angeordnete, zum richtungsgeführten Wegschieben der von der Ständerkonsole (4) gelösten Werkzeugspindeleinheit (10) aus ihrer Arbeitsposition (AP) in eine im Abstand von der Ständerkonsole (4) eingerichtete Bereitschaftsposition (16) ausgebildete (erste) Verschiebebahn (41) aufweist.

21. Vorrichtung nach Anspruch 20, dadurch gekennzeichnet, dass die (erste) Verschiebebahn (43) einen heb- und senkbaren Abschnitt unterhalb der in Arbeitsposition (AP) befindlichen Werkzeugspindeleinheit (10) aufweist.

22. Vorrichtung nach Anspruch 20, dadurch gekennzeichnet, dass die Ständerkonsole (4) oder deren Anschlusselement (45) für die lösbare Verbindung mit der Werkzeugspindeleinheit (10) aus der jeweiligen Arbeilsposition (AP) absenkbar ausgebildet ist.

23. Vorrichtung nach Anspruch 20, dadurch gekennzeichnet, dass die (erste) Verschiebebahn (43) an ihrem Ende eine Verzweigung oder eine Drehscheibe (42) aufweist, an welche eine weitere (zweite) Verschiebebahn (44) angeschlossen ist, die als Bereitschaftsposition (16) für eine Mehrzahl von, Werkzeugspindeleinheiten (10,11) ausgebildet ist oder zu dieser hinführt.

24. Vorrichtung nach Anspruch 22, dadurch gekennzeichnet, dass die erste Verschiebebahn (43) geradlinig verläuft und die an ihrem Ende anschliessende rechtwinklig zu ihr verlaufend beidseitig sich erstreckende zweite Verschiebebahn (44) als Bereitschaftsposition (16) für eine Mehrzahl von Werkzeugspindel einheiten (10,11) ausgebildet ist.

25. Vorrichtung nach Anspruch 20, dadurch gekennzeichnet, dass die Werkzeugspindeleinheiten (10) mit einem unmittelbar auf der Spindelwelle angeordneten Synchronläufermotor versehen sind.

26. Vorrichtung nach Anspruch 20, dadurch gekennzeichnet, dass der Frequenzgenerator für den Synchronläufermotor im Bereich des Anschlusselements (45) der Ständerkonsole (4) zur lösbaren Verbindung mit der in Arbeitsposition (AP) befindlichen Werkzeugspindeleinheit (10) in oder an der Ständerkonsole (4) angeordnet ist.

27. Vorrichtung nach Anspruch 20, dadurch gekennzeichnet, dass das Anschlusselement (45) der Ständerkonsole (4) und die Anschlussflächen (46) der Werkzeugspindeleinheiten (10) mit fernsteuerbar druckmittelbetätigsbaren Pass- und Ankervorrichtungen und Schnellverbindungen für die Stromübertragung versehen sind.

## Claims

1. Device for metal cutting of a workpiece in a holding fixture by tools which are alternately shiftable into their working position and removable from a tool hopper, together with
A. 1 a control device for the clocked sequencing of the algorithmically preset machining steps until obtaining the finished size of the workpiece and, further, with
A. 2 a changer for the tool spindle unit allowing the specific tool spindle unit (10), which is to be found in the working position and inserted into a locating device, to be moved out of this device and to be interchanged for a tool spindle unit (11) being in a ready position, and with
A. 3 a tool changer for turning, drilling, milling and grinding tools comprising a power-operable, shiftable, turnable and horizontally swingable tong gripper of which the openable and closeable clamping jaws can be adjusted to the tool removal axis and the spindle axis (Z1).
characterized in that
B. 1 its clamping jaws (28, 29) show a mirror-inverted contour of the jaw profile (30) which has been shaped for receiving tools (WZ) with more than two different sizes of shanks or tapers, and
B. 2 each contour of the jaw profile (30) has at least three consecutive circarc sections (a, b, d) of which the radii have been adapted to the different diameters of at least three shank or taper sizes.

2. Device according to claim 1, characterized in that
C. 1 there is a distance (f) between the circarc sections (a, b, d) and the appertaining generating circular arcs (EBa, EBb, EBd) of which the generating radii (ERa, ERb, ERd) exceed the radii of the circarc sections a, b, d by the distance (f)
C. 2 with said device, the circle centers (Ma, Mb, Md) of the generating circular arcs (EBa, EBb, EBd) as well as the circle center (Mc) of a further generating circular arc (EBc), with generating radius (ERc), are located on an opening circular arc (KB) intersecting the feed and removal axis (Z1), and of this arc, the generating center (MKB) coïncides with the center of motion (D) of the swivelling clamping jaws (28, 29), and on said opening circular arc,
C. 3 the circle centers (Ma, Mb, Mc, Md) of all generating circular arcs (EBa, EBb, EBc, EBd) for the different shank diameters of the tools (W) to be seized will, at the respective opening widths of the clamping jaws (28, 29), coïncide with the feed and removal axis (Z1).

3. Device according to claim 2, characterized in that all generating radii (ERa, ERb, ERc, ERd) form a first intersection point (SP1) where the generating circular arcs (EBb and EBd) meet and each couple of adjacent generating radii (ERb, ERc and ERa, ERd) will form a second and a third intersection point (SP2, SP3) and, further, that the generating circular arcs (EBa, EBb) are located between these points of intersection and, moreover, that the generating circular arc (EBd) having the greatest generating radius (ERd) extends from the first point of intersection towards the trunnion mounting (36).

4. Device according to claim 1, characterized in that the power-operated clamping jaws (28, 29) are held in trunnion mountings (36) of a swivelling base plate (24).

5. Device according to claim 4, characterized in that the base plate (24) of the clamping jaws (28, 29) can be swivelled by 180°.

6. Device according to claim 4, characterized in that the base plate (24) of the clamping jaws (28, 29) can be swivelled by 90°.

7. Device according to claim 4, characterized in that two gripping tongs (GZ) have been arranged, opposed and mirror-inverted, on a longitudinal gripper axis (G1) on the base plate (24).

8. Device according to claim 4, characterized in that the base plate (24) has been completed by a covering plate to form a gripper case (32) having at both sides some openings (33) for the exit of the clamping jaws (28, 29).

9. Device according to claim 4, characterized in that the outside ends (34, 35) of the clamping jaws (28, 29) will, at their greatest opening position, be withdrawn in the openings of the gripper case (32).

10. Device according to claim 4, characterized in that the outside ends (34, 35) of the clamping jaws (28, 29) form, in the greatest opening position, an angle (a) from 15° to 25° to a cross axis (G2) being perpendicular to the longitudinal gripper axis (G1) and intersecting the trunnion mounting (36).

11. Device according to claim 4, characterized in that to each couple of clamping jaws (28, 29), a separate piston- cylinder unit (50) has been assigned of which the piston rods (51) have been connected with one each longitudinally shiftable buttress (52), a pressure spring assembly (53) exerting a locking pressure to the clamping jaws, and with a transmission link (54, 60, 61) exerting a piston stroke opposed to the spring pressure towards the opening.

12. Device according to claim 11, characterized in that between the buttress (52) and the clamping jaws (28, 29), a thrust member (55) has been installed of which the pressure noses (56) at both sides smoothly transmit the locking pressure from the pressure springs (53) to the rear shape cams (57) of the clamping jaws (28, 29).

13. Device according to claim 4, characterized in that each of the two clamping jaws (28, 29) has, at the rear, been provided with some opposed and mirror-inverted shoulders (63) being fitted with consecutive and stepped locking teeth (59) and between these shoulders, a stop nose (60) linked to the buttress (52) can be introduced.

14. Device according to claim 11, characterized in that some pressure spring assemblies (58) have been mounted between the buttress (52) and the thrust member (55).

15. Device according to claim 11, characterized in that the transmission link (54) connected to the buttress (52) has, for each clamping jaw (28, 29) been provided, at both sides, with some link guides (61) in which the restoring bolts (62), secured to the clamping jaws (62), will glide.

16. Device according to claims 1 and 4, characterized by
a) the arrangement of the tong gripper (ZG) pivoting around an horizontal axis (v) at a bracket (40), rotating by power drive around a vertical axis (w), which
b) can be moved on a guideway (41) by at least one stroke step (forward/backward), viz. parallel to the tool locating axis or spindle axis (X1).

17. Device according to claim 16, characterized in that in the starting position (A) and by means of the double tong gripper (ZG), a first tool (WZ 1) available in the toolhopper (14) can be seized by the first tong (Z1), and by displacement of one stroke step (H1) and turning the bracket (40) by 90° around the vertical axis (w), the second tong (Z2) can seize a second tool (WZ 2) available in the spindle (13) and draw it out of the spindle (13) by a return stroke step (R) of the tool spindle unit (10) and, further, that thereafter, by pivoting the tong gripper (ZG) by 180° around the horizontal axis (v), the first tool (WZ 1) can be brought in front of the spindle (13) and, by performance of a further return stroke step (R), it can be fed into the spindle (13), and the device can then be moved into the starting position (A) by returning the bracket (40) by 90° around the vertical axis (w) and displacement by the reversing stroke step (H2) where the second tool (WZ 2) can be inserted into the tool hopper (14).

18. Device according to claim 16, characterized in that in the starting position (A) and by action of the double tong gripper (ZG), a first tool (WZ 1) being in the tool hopper (14) is seizable by the first tong (Z1), and by a first stroke step (H1), rotation of the bracket (40) by 90° around the vertical axis (w) and by means of the second tong (Z2), a second tool (WZ 2), available in the spindle, can be seized and pulled out of the spindle (13) by a second stroke step (H2), and that thereafter, by pivoting the tong gripper (ZG) by 180° around the horizontal axis (v), the first tool (WZ 1) is positionable before the spindle (13) and insertable into the latter by a third reversing stroke step (H3), and thereafter, the device is movable to the starting position (A) by returning the bracket (40) by 90° around the vertical axis (w) and displacement by the reversing stroke step (H) where the second tool (WZ 2) is insertable into the tool hopper (14).

19. Device according to claim 16, characterized in that in the starting position (A) and by means of the tong gripper (ZG), a first tool (WZ 1) available in the tool hopper (14) can be seized by the first tong (Z1) and a second tool (WZ 2) being in the spindle (13) is seizable by the second tong (Z2) and by the displacement by a first stroke step (H1) and pivoting by 90° around the horizontal axis (v) as well as by turning the bracket (40) by 90° around the vertical axis (w) and returning the tong gripper (ZG) by 90° around the horizontal axis (v), and extractable from the spindle (13) by a second stroke step (H2), and that, thereafter, by turning the tong gripper (ZG) by 180° around the horizontal axis (v), the first tool (WZ 1) can be moved in front of the spindle (13) and by execution of a - third - reversing stroke step (H3) it can be inserted into the spindle (13), and the device can then be shifted to the starting position (A) by pivoting the tong gripper (ZG) by 90° around the horizontal axis (v), returning the bracket (40) by 90° around the vertical axis (w), pivoting the tong gripper (ZG) back by 90° around the horizontal axis (v) and performing the travel by the reversing stroke step (H) , where the second tool (WZ 2) can be inserted into the tool hopper (14).

20. Device according to claim 1, characterized in that the changer for the tool spindle unit comprises
D. 1 a vertical column-type bracket (4) arranged on a common machine base unit (1) as well as
D. 2 a tool spindle unit (10), detachably and exchangeably linked to this bracket depending on the operational conditions,
and
D. 3 a (first) shifting path (41) arranged below the tool spindle unit (10) which will be connected to the column-type bracket (4) depending on the operational conditions, said path being designed for the directional displacement of the tool spindle unit (10), when separated from the column-type bracket (4), from its working position to a ready position (16) arranged at a certain distance from the column-type bracket (4).

21. Device according to claim 20, characterized in that below the tool spindle unit (10) being in its working position , a certain section of the (first) shifting path (43) can be lifted and lowered.

22. Device according to claim 20, characterized in that the column-type bracket (4) or its link (45) for the detachable connection with the tool spindle unit (10) has been designed in such a way that it can be lowered from the specific working position.

23. Device according to claim 20, characterized in that the end of the (first) shifting path (43) shows a branching or a turntable (42) linked to a further (second) shifting path (44) which has been designed as a ready position (16) for several tool spindle units (10, 11) or leads to this position.

24. Device according to claim 22, characterized in that the first shifting path (43) has a rectilinear course and the second shifting path (44) meeting the end of the first one at right angles and extending at both sides, has been designed as a ready position (16) for several tool spindle units (10, 11).

25. Device according to claim 20, characterized in that the tool spindle units (10) have been provided with a synchronous motor, arranged directly on the spindle shaft.

26. Device according to claim 20, characterized in that the frequency converter for the synchronous motor has been arranged in or on the column-type bracket (4), within the area of the link (45) of the column-type bracket (4) for the detachable connection with the tool spindle unit (10) being in its working position.

27. Device according to claim 20, characterized in that the link (45) of the column-type bracket (4) and the joining surfaces (46) of the tool spindle units (10) have been provided with fitting elements and anchoring devices which can be remote-controlled and operated by compressed air or oil, also comprising some rapid connections for the power transmission.

## Revendications

1. Dispositif pour l'usinage de métaux, c'est-à-dire d'une pièce à travailler dans un système de fixation, par des outils qui pourront se prendre d'un magasin à outils et se mettre, en alternance, dans leur position de travail, comportant
A. 1 un dispositif de commande pour le contrôle de séquence synchronisé des pas d'usinage algorithmiquement établis jusqu'à ce qu'on atteigne la dimension finale de la pièce à travailler,
A. 2 un changeur pour ensemble à broche d'outils (10) avec lequel l'ensemble à broche d'outil respectif (10) se trouvant en position de travail, a été logé dans un dispositif de réception et pourra en sortir et s'interchanger contre un ensemble à broche d'outil (11) disponible à une position d'attente, et
A. 3 un changeur pour des outils de tournage, perçage, fraisage et affûtage comprenant une griffe à pinces actionnable par source d'énergie extérieure, deplaçable, tournable et balayable dont les mâchoires de griffe ouvrables et fermables pourront s'orienter vers l'axe de prise d'outil et l'axe de broche (Z1) ,
caractérisé par ce que
B. 1 ses mâchoires de griffe (28, 29) présentent un contour inversé de profil de mâchoire (30) conçu pour la réception des outils (WZ) ayant plus que deux tailles de tige ou de cône, et
B. 2 chaque contour de profil de mâchoire (30) aura au moins trois segments successifs en forme d'arc de cercle (a, b, d) dont les rayons ont été adaptés aux diamètres différents de trois tailles de tige respectivement de cône, au minimum.

2. Dispositif selon revendication 1, caractérisé par ce que
C. 1 il y a une distance (f) entre les segments en forme d'arc de cercle (a, b, d) et les arcs de cercle générateurs (EBa, EBb, EBd) en cause dont les rayons générateurs (ERa, ERb, ERd) sont plus grands que les rayons des segments en forme d'arc de cercle. (a, b, d) par la distance (f),
C. 2 ici, les centres de cercle (Ma, Mb, Md) des générateurs (EBa, EBb, EBd) ainsi que le centre de cercle (Mc) d un autre arc générateur (EBc) avec le rayon générateur (ERc) se trouvent sur un arc de cercle d'ouverture (KB) coupant l'axe d'alimentation et de prise (Z1), cercle d'ouverture dont le centre générateur (MKB) coïncide avec le centre de rotation (D) des mâchoires de griffe pivotants (28, 29) et sur lequel
C. 3 les centres de cercle (Ma, Mb, Mc, Md) de tous les arcs générateurs en forme de cercle (EBa, EBb, EBc, EBd) pour les divers diamètres de tige des outils à saisir (W) coïncident, en cas de largeurs d'ouverture correspondantes des mâchoires de griffe (28, 29), avec l'axe d'alimentation et de prise (Z1).

3. Dispositif selon revendication 2, caractérisé par ce que tous les rayons générateurs (ERa, ERb, ERc, ERd) forment un premier point de coupure (SP1) dans lequel les arcs de cercle générateurs (EBb et EBd) se touchent et chaque fois deux rayons générateurs voisins (ERb, ERc et ERa, ERd) forment un deuxième et troisième point de coupure (SP2, SF3), et que les arcs de cercle générateurs (EBa, EBb) s'étendent entre ces points de coupure, et encore que l'arc de cercle générateur (EBd) ayant le rayon générateur le plus grand (ERd) s'étend du premier point de coupure en direction du montage à tourillon (36).

4. Dispositif selon revendication 1, caractérisé par ce que les mâchoires de griffe (28, 29), actionnés par source d'énergie extérieure, sont tenus par les montage s à tourillon (36) d'une plaque de base orientable (24).

5. Dispositif selon revendication 4, caractérisé par ce que la plaque de base (24) des mâchoires de griffe (28, 29) est orientable par 180°.

6. Dispositif selon revendication 4, caractérisé par ce que la plaque de base (24) des mâchoires de griffe (28, 29) est orientable par 90°.

7. Dispositif selon revendication 4, caractérisé par ce que deux pinces de griffe (GZ) ont été disposées, l'une en face de l'autre et renversées, sur un axe longitudinal de griffe (G1) de la plaque de base (24).

8. Dispositif selon revendication 4, caractérisé par ce qu'à l'aide d'une plaque de recouvrement, la plaque de base (24) a été complétée pour former un cage de griffe (32) ayant des deux côtés des ouvertures (33) permettant la sortie des mâchoires de griffe (28, 29).

9. Dispositif selon revendication 4, caractérisé par ce qu'en position d'ouverture maximale, les bouts extérieurs (34, 35) des mâchoires de griffe (28, 29) se trouvent retirés dans les ouvertures de la cage de griffe (32).

10. Dispositif selon revendication 4, caractérisé par ce qu'en position d'ouverture maximale, les bouts extérieurs (34, 35) des mâchoires de griffe (28, 29) forment un angle (a) entre 15° et 25° par rapport a un axe transversal (G2) coupant le montage à tourillon (36), axe étant perpendiculaire sur l'axe longitudinal de la griffe (G1).

11. Dispositif selon revendication 4, caractérisé par ce qu'à chaque paire de mâchoires de griffe (28, 29), un ensemble piston-cylindre séparé (50) a été attribué dont les tiges de piston (51) sont reliées, chacune, à une butée déplaçable en sens longitudinal (52), à un groupe de ressorts à pression (53) exerçant une pression de fermeture sur les mâchoires de griffe, et à un élément de transmission (54, 60, 61) qui réalise une course de piston dirigée contre la pression de ressort en sens d'ouverture.

12. Dispositif selon revendication 11, caractérisé par ce qu'entre la butée (52) et les mâchoires de griffe (28, 29), un membre de pression (55) a été installé dont les nez de pression (56), disposés des deux côtés, transmettent la pression de fermeture des ressortsde pression (53) de manière glissante aux courbes de forme arrières (57) des mâchoires de griffe (28, 29).

13. Dispositif selon revendication 4, caractérisé par ce qu'à l'arrière, les deux mâchoires de griffe (28, 29) présentent des épaulements (63) opposés, renversés et dotés des dents d'arrêt (59) consécutive s et échelonnées, et entre ces épaulements, un nez d'arrêt (60), relié à la butée (52), pourra s'introduire.

14. Dispositif selon revendication 11, caractérisé par ce qu'entre la butée (52) et le membre de pression (55), les blocs-ressorts de pression (58) ont été installés.

15. Dispositif selon revendication 11, caractérisé par ce que l'élément de transmission (54), relié à la butée (52), a été pourvu, des deux côtés, des guides de coulisse (61) pour chaque mâchoire de griffe (28, 29), et dans ces guides,fixées aux mâchoires de griffe (62), des chevilles de retour (62) glisseront.

16. Dispositif selon les revendications 1 et 4, caractérise par
a) la disposition de la griffe à pinces (ZG) pivotant autour de l'axe horizontal (v) à une console orientable (40), autour d'un axe vertical (w), au moyen d'un entraînement mécanique, console qui
b) pourra se déplacer sur une glissière (41) parallèlement à l'axe de raccordement d'outil respectivement de broche (x₁) par au moins un seul pas de course en avant et en arrière.

17. Dispositif selon revendication 16, caractérisé par ce que grâce à la griffe à pince double (ZG), en position de départ (A), un premier outil (WZ 1) disponible dans le magasin à outils (14) pourra être saisi par la première pince (Z 1) et, par le déplacement par un pas de course (H1) et la rotation de la console (40) par 90° autour de l'axe vertical (w), un deuxième outil se trouvant dans la broche (13) est saisissable par la deuxième pince (Z 2) et pourra se tirer de la broche (13) par un pas de course en arrière (R) de l'ensemble à broche d'outil (10), et qu'ensuite, par le pivotement de la griffe à pinces (ZG) par 180° autour de l'axe horizontal (v), le premier outil (WZ 1) sera transportable en face de la broche (13) et insérable dans la broche (13) par l'exécution d'un autre pas de course en arrière (R) et, après cela, le dispositif sera déplaçable à la position de départ (A) par rotation en arrière de la console (40) par 90° autour de l'axe vertical (w) et par le pas de course renversé (H2), position à laquelle le deuxième outil (WZ 2) pourra être placé dans le magasin à outils (14).

18. Dispositif selon revendication 16, caractérisé par ce qu'au moyen de la griffe à pince double (ZG), en position de départ (A), un premier outil (WZ 1) disponible dans le magasin à outils (14) sera saisissable par la première pince (Z 1) et, par exécution du premier pas de course (H1) et rotation de la console (40) par 90° autour de l'axe vertical (w), au moyen de la deuxième pince (Z 2), il sera possible de saisir un deuxième outil (WZ 2) et de le tirer de la broche (13) par un deuxième pas de course (H2), et qu'ensuite, par pivotement de la griffe à pinces (ZG) par 180° autour de l'axe horizontal (v), le premier outil sera transportable devant la broche (13) et, par exécution d'un troisième pas de course renverse (H3), insérable dans la broche (13) et, encore, par rotation inversée de la console (40) par 90° autour de l'axe vertical (w) et le pas de course renversé (H) , le dispositif sera déplaçable à la position de départ (A), où le deuxième outil (WZ 2) pourra se charger dans le magasin à outils (14).

19. Dispositif selon revendication 16, caractérisé par ce que, grâce à la griffe à pinces (ZG), en position de départ (A), un premier outil (WZ 1) contenu dans le magasin à outils (14) pourra se saisir par la première pince (Z 1) et par la réalisation d'un premier pas de course (H1) et le pivotement par 90° autour de l'axe horizontal (v) ainsi que par rotation de la console (40) par 90° autour de l'axe vertical (w) et pivotement inversé de la griffe à pinces (ZG) par 90° autour de l'axe horizontal (v), un deuxième outil (WZ 2) se trouvant dans la broche (13) sera saisissable à l'aide de la deuxième pince (Z2) et pourra se retirer de cette broche (13) par un deuxième pas de course (H2), et qu'ensuite, par pivotement de la griffe à pinces (ZG) par 180° autour de l'axe horizontal (v), le premier outil (WZ 1) pourra s'amener en face de la broche (13) et s'introduire dans la broche (13) par exécution d'un troisième pas de course renversé (H3) et, après cela, le dispositif pourra se déplacer à la position de départ (A) par pivotement de la griffe à pinces (ZG) par 90° autour de l'axe horizontal (v), par rotation inversée de la console (40) par 90° autour de l'axe vertical (w), par pivotement de retour de la griffe à pinces (ZG) par 90° autour de l'axe horizontal (v) et par déplacement par le pas de course renversé dans position à laquelle le deuxième outil (WZ 2) sera insérable dans le magasin à outils (14).

20. Dispositif selon revendication 1,
caractérisé par ce que le changeur de l'ensemble à broche d'outil comporte
D. 1 une console à montant verticale (4) disposée sur une base de machine commune (1) ainsi que
D. 2 un ensemble à broche d'outil (10) relié à cette console d'une façon détachable et interchangeable selon les conditions de fonctionnement, et
D. 3 une (première) glissière de déplacement (41) disposée au-dessous de l'ensemble à broche d'outil (10), relié à la console a montant (4) selon les conditions de fonctionnement, glissière conçue pour le déplacement directionnel de l'ensemble à broche d'outil (10) détaché de la console à montant (4), à partir de sa position de travail à une position d'attente (16) disposée à une certaine distance de la console à montant (4).

21. Dispositif selon revendication 20, caractérisé par ce que la (première) glissière (43) présente un segment permettant un levage ou un abaissement, segment disposé audessous de l'ensemble à broche d'outil (10) se trouvant en position de travail.

22. Dispositif selon revendication 20, caractérisé par ce que la console à montant (4) ou son élément de raccordement (45) pour la liaison détachable avec l'ensemble à broche d'outil (10) a été réalisé pour un abaissement à partir de la position de travail respective.

23. Dispositif selon revendication 20, caractérisé par ce que le bout de la (première) glissière de déplacement (43) présente un branchement ou une plaque tournante (42) en liaison avec uneautre (deuxième) glissière de déplacement (44) conçue comme position d'attente (16) pour plusieurs ensembles à broche d'outil (10, 11) ou conduisant à cette dernière.

24. Dispositif selon revendication 22, caractérisé par ce que la première glissière de déplacement (43) présente une allure rectiligne et que la deuxième glissière de déplacement (44) partant du bout de la première et s'étendant des deux côtés perpendiculairement à cette première glissière, a été conçue en tant que position d'attente (16) destinée à plusieurs ensembles à broche d'outil (10, 11).

25. Dispositif selon revendication 20, caractérisé par ce que les ensembles à broche d'outil (10) ont été dotés d'un moteur synchrone disposé directement sur l'arbre de broche.

26. Dispositif selon revendication 20, caractérisé par ce que le changeur de fréquence pour le moteur synchrone a été disposé dans le domaine de l'élément de raccordement (45) de la console à montant (4) pour la liaison détachable avec l'ensemble à broche d'outil (10) se trouvant en position de travail (AP), soit dans ou à cette console à montant (4).

27. Dispositif selon revendication 20, caractérisé par ce que l'élément de raccordement (45) de la console à montant (4) et les faces de raccordement (46) des ensembles à broche d'outil (10) ont été munis des dispositifs de serrage et d'ancrage permettant une télécommande et un actionnement par des moyens comprimés (air ou huile), ainsi que des raccords instantanés pour la transmission d'électricité.
